# EUROPEAN PATENT APPLICATION

(11) **EP 4 513 882 A1**
(43) Date of publication of application: **26.02.2025**
(21) Application number: 23204098.0
(22) Date of filing: 17.10.2023
(51) Int. Cl.: H04N 21/6547, H04N 21/658, H04N 21/6587, H04N 21/81, H04N 21/858, H04N 21/41

(54) **METHOD AND DEVICE FOR SHARING CONTENT**

(30) Priority: 25.08.2023 KR 20230112104
(71) Applicant: LG Electronics Inc., Yeongdeungpo-gu Seoul 07336 (KR)
(72) Inventor: SHIN, Byounghyun, 08592 Seoul (KR); PARK, Taejin, 08592 Seoul (KR); LEE, Eunjung, 08592 Seoul (KR); JANG, Yoonsuk, 08592 Seoul (KR)
(74) Representative: Vossius & Partner Patentanwälte Rechtsanwälte mbB

(57) **Abstract**

Proposed is a method for sharing content between devices, the method including providing information on sharing candidate devices in response to a request for sharing content, wherein the request for sharing content includes information on a content type of the content to be shared, detecting selection for one of the sharing candidate devices, determining a sharing type based on the content type or the selected device and generating information for sharing content based on the determined sharing type, and transmitting the information for sharing content to the selected device.

## Description

### TECHNICAL FIELD

The present disclosure relates to a method and a device for sharing content, and more particularly, to a technology for sharing content consumed on a specific device to another device.

### BACKGROUND ART

Recently, in multimedia devices such as a mobile phone and a TV, a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use 'flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an OLED, for example. The OLED is a display using an organic light emitting material, the organic material is relatively more flexible than an inorganic material such as a metal. Furthermore, the OLED has a thin substrate and thus is more competitive than other displays. In a case of an LCD substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

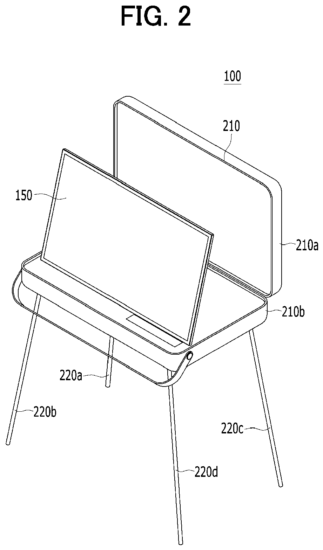

FIG. 2 shows an example of a TV of a new form-factor.

Creation of TVs of various form-factors is all for a purpose of increasing a user experience, which aims to provide satisfaction with seamless consumption of content within the home (a specific space), sharing of the content with others, and the like.

As a representative example, there is a technology that allows content being watched on a mobile device (e.g., the smartphone) to be watched via the TV within the home.

However, the existing sharing scheme required the user to select a different scheme depending on a content type or an app playing the content, which required the user to be familiar with usage.

### DISCLOSURE

### TECHNICAL PURPOSE

The present disclosure is to provide a more concise and efficient way to share content between devices.

### TECHNICAL SOLUTION

Proposed is a method for sharing content between devices including providing information on sharing candidate devices in response to a request for sharing content, wherein the request for sharing content includes information on a content type of the content to be shared, detecting selection for one of the sharing candidate devices, determining a sharing type based on the content type or the selected device and generating information for sharing content based on the determined sharing type, and transmitting the information for sharing content to the selected device.

Proposed is a multimedia device for sharing content including a display that outputs content, and a controller that executes an app and controls the content to be output on the display, wherein the controller receives information for sharing content, determines an app to be executed for the shared content based on the received information for sharing content, and executes the determined app, wherein the information for sharing content is generated depending on a content type of the shared content or a sharing type determined based on the multimedia device.

Proposed is a mobile multimedia device for sharing content including a transceiver that transmits information for sharing content, and a controller that generates the information for sharing content and controls the transceiver, wherein the controller provides information on sharing candidate devices in response to a request for sharing content, wherein the request for sharing content includes information on a content type of the content to be shared, detects selection for one of the sharing candidate devices, determines a sharing type based on the content type or the selected device and generates the information for sharing content based on the determined sharing type, and transmits the information for sharing content to the selected device or via a server.

The above technical solutions are only some of the embodiments of the present disclosure, and various embodiments reflecting the technical features of the present disclosure may be derived and understood based on the detailed description of the present disclosure as described below by a person with ordinary knowledge in the technical field.

### ADVANTAGEOUS EFFECTS

The present disclosure has following effects:

The present disclosure may efficiently support content sharing between devices.

Additionally, the present disclosure may support sharing content not only with a device in a local network but also with a device in a remote network and overcome space constraints.

Effects that may be obtained from the present disclosure are not limited to the effects mentioned above, and other effects not mentioned may be clearly understood by those skilled in the art in the technical field to which the present disclosure belongs from a description below.

### DESCRIPTION OF DRAWINGS

The accompanying drawings, which are included as a portion of the detailed description to aid understanding of the present disclosure, provide embodiments of the present disclosure and illustrate the technical idea of the present disclosure along with the detailed description.
FIG. 1 is a block diagram for illustrating each component of a display device.
FIG. 2 is a diagram showing a display device according to an embodiment of the present disclosure.
FIG. 3 briefly shows procedures of content sharing according to the present disclosure.
FIGS. 4 to 9 are flowcharts of methods for sharing content between devices according to the present disclosure.
FIG. 10 shows a block diagram of a device according to the present disclosure.

### BEST MODE

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

In a following description, a display device will be referred to as a display device 100, but the display device may be referred to by various names such as a TV or a multimedia device, and the scope of the present disclosure is not limited by the name.

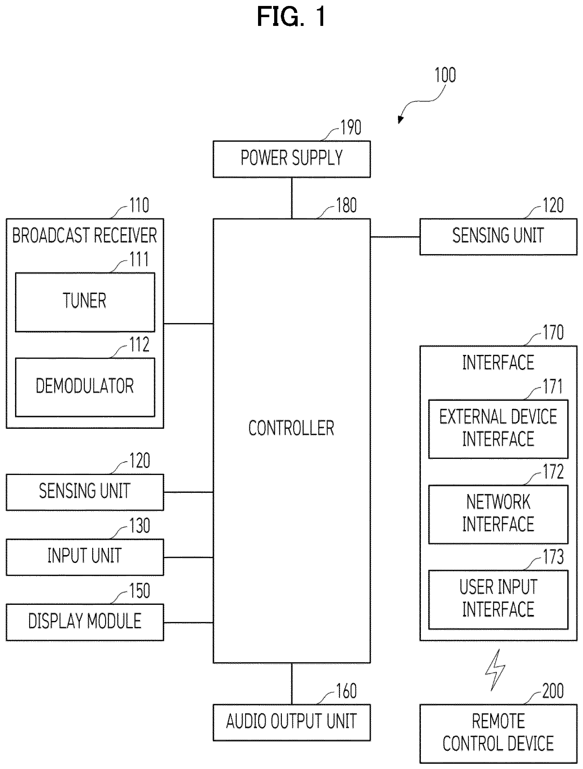

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

FIG. 2 is a diagram showing a display device according to an embodiment of the present disclosure. Hereinafter, redundant descriptions duplicate with the above descriptions will be omitted.

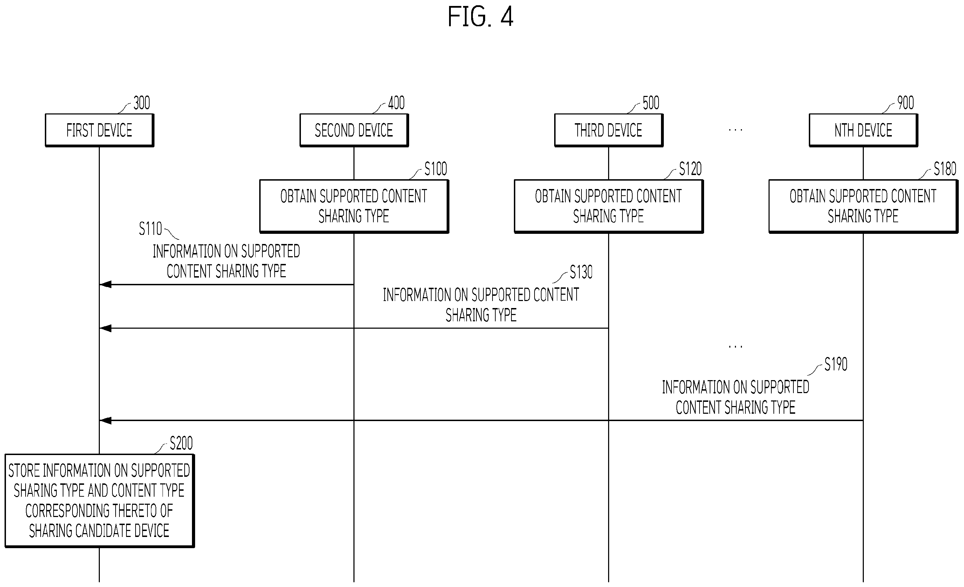

Referring to FIG. 4, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device shown in FIG. 2 is an example, and a display device to which the present disclosure may be applied include not only a display device having a new form-factor, but also a display device with an existing form-factor including a general flat-screen TV.

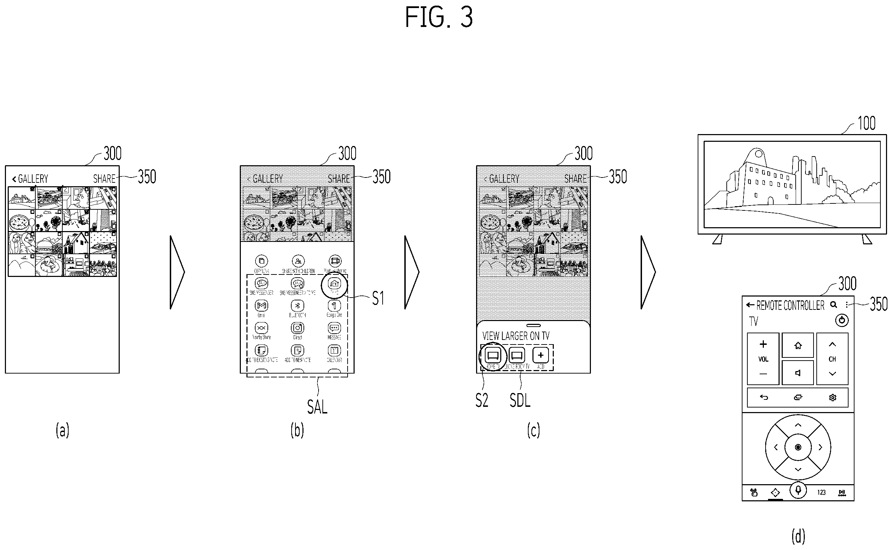

Hereinafter, the present proposed technology will be described with reference to FIGS. 3 to 10.

FIG. 3 briefly shows procedures of content sharing according to the present disclosure.

Content sharing may proceed in an order from (a) to (d) in FIG. 3. Referring to (a), a list of photos and images stored in a first device 300 is displayed on a display 350 of the first device 300. Among the displayed photos and images, a photo or an image to be shared with another device may be selected.

Referring to (b), after the photo or the image to be shared with another device is selected among the photos and the images displayed on the display 350 of the first device 300, a list of apps for the sharing (SAL; sharing apps list) is displayed as icons. An "app" is short for "application," and it refers to a type of computer program designed to perform specific functions or tasks. Apps are primarily associated with smartphones, tablets, computers, and other digital devices (that is, the multimedia device). When selection of a specific app S1 among the apps is detected, information displayed on the display 350 of the first device 300 is a list of target devices to receive the selected photo or image (SDL; sharing devices list), that is, sharing candidate devices. This is shown in (c).

The SDL of the sharing candidate devices is generated by the first device 300 via prior information exchange with each sharing candidate device. Each sharing candidate device is pre-registered to the first device 300 or establishes an interconnection therewith via the app S 1 for the content sharing. In this regard, each sharing candidate device transmits a sharable content type and a content sharing type corresponding thereto to the first device 300. Accordingly, the first device 300 may know information on the sharing candidate devices, the sharable content type of each device, and the content sharing type corresponding thereto, and may store such information locally. However, the first device 300 may not display all devices in the list of the sharing candidate devices stored in advance in step (c), but display only devices that are online. One device may be selected from the list of the sharing candidate devices, and when the corresponding selection is detected, content is shared with the selected device 100.

Referring to (d), the photo or the image selected in (a) is displayed on a display of the selected device 100. Additionally, a control user interface (UI) for controlling the corresponding content or an app of the device 100 that outputs the content is displayed on the display 350 of the first device 300, and a function for the control UI is activated.

In FIG. 3, the content to be shared is illustrated as the photo or the image, but the content type according to the present disclosure is not limited to the photo or the image. For example, sharing is possible for various content types as follows:

**[Table 1]**

| No | Content type | Sharing type | Data transmitted (content sharing information) |
|---|---|---|---|
| 1 | Photo, image | Casting | URL |
| 2 | Video | Casting | URL |
| 3 | OTT(VOD) content | Casting | Deep link URL |
| 4 | Web page | Casting | URL |
| 5 | Other | Mirroring | Mirroring data |

In addition, for content types other than the photo and the image, an interface and/or a procedure for sharing between devices via a specific app is provided, as shown in (b) and (c) in FIG. 3, allowing the user to share the content with another device via selecting or activating a single icon/menu. This has an effect of improving a user experience.

Conventionally, there was an icon/menu selection or activation scheme for sharing the content between the devices depending on the content type or the app that is playing or outputting the content. This caused inconvenience as the user had to learn how to share the content for each content type or app used.

Referring to FIG. 3, the device 300 on a side that wants to share the content is shown as a mobile multimedia device, and the device 100 on a side that receives the shared content is shown as a TV. However, it is not necessarily the case that the present disclosure may only be applied between mobile or stationary multimedia devices. In other words, a mobility or a size of the device, the form-factor, and the like are not able to limit the scope of rights of the present disclosure.

Hereinafter, the present disclosure will be described in detail with reference to FIGS. 4 to 9. A procedure according to FIGS. 4 to 9 may be performed by each of illustrated devices 300, 400, 500, ..., 900 or a controller of each device, or a server 1000 or a controller of the server. However, for simplicity of description, hereinafter, it will be described that the device or the server performs an operation.

The procedures in FIGS. 4 to 9 basically describe a scenario for the first device 300 to share the content with other devices 400, 500, ..., and 900. The devices 300, 400, ..., and 900 in FIGS. 4 to 9 are devices including a transceiver, a display, and the controller and correspond to the "multimedia devices," but names thereof do not limit the scope of the present disclosure.

FIG. 4 shows a flowchart of procedures for sharing content between devices according to the present disclosure. FIG. 4 relates to procedures for collecting information on a sharing type (or scheme) and a content type supported by each device before sharing the content. In other words, for the content sharing between the devices, the device may register sharing candidate devices in advance to itself or configure or establish an interconnection with the sharing candidate devices.

Each of the devices 400, 500, ..., and 900 may obtain a content sharing type and a content type corresponding thereto, supported by itself (S100, S120, and S180). Then, each of the devices 400, 500, ..., and 900 may transmit information on the supported sharing type and the content type corresponding thereto to the first device 300 (S110, S130, and S190).

The first device 300 may store the information on supported sharing type and the content type corresponding thereto received from each of the devices 400, 500, ..., and 900 therein (S200).

When a request for sharing content is detected thereafter, the stored information on the sharing type and the content type corresponding thereto may be used in determining the sharing candidate devices based on a sharing type and a content type corresponding thereto related to the request for sharing content, and providing a list of the determined sharing candidate devices or a list of the determined sharing candidate devices including the sharing type and the content type.

In one example, the procedures S100, S110, S120, S130, S180, S190, and S200 in FIG. 4 may be initiated when a request from the first device 300, a specific condition, or the like is satisfied.

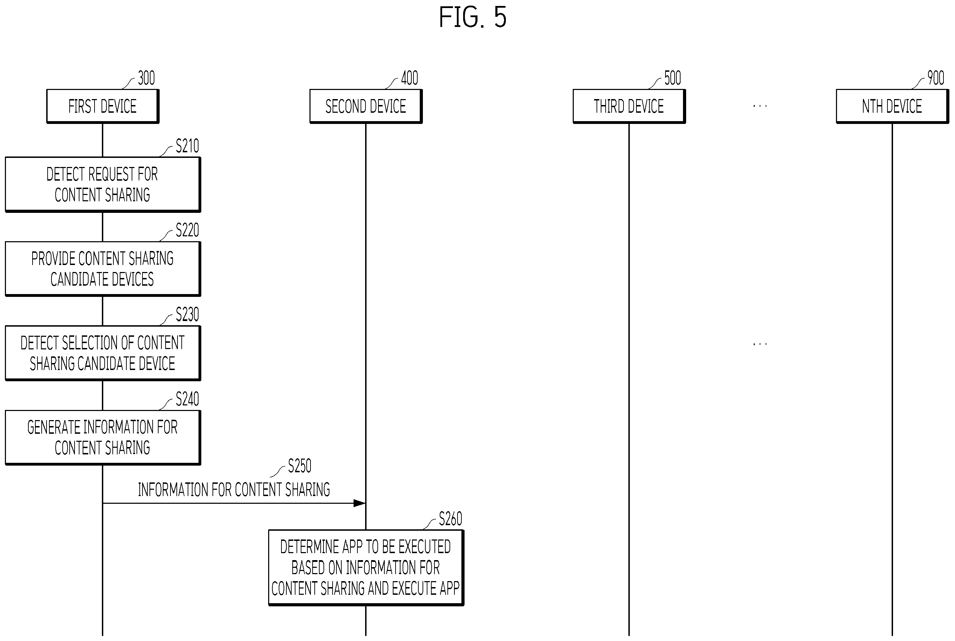

FIG. 5 shows a flowchart of procedures for sharing content between devices according to the present disclosure. FIG. 5 shows procedures when the second device 400 is selected among the one or more sharing candidate devices. FIG. 5 shows operations and communication of the first device 300 that requested the content sharing and the sharing candidate device 400, but the present disclosure may be extended even for a case in which other devices 500 and 900 are selected.

The first device 300 detects a request for sharing content (S210). The request for sharing content may be input by a user via a user input interface. The request for sharing content may include the information on content type and/or the sharing type.

The first device 300 provides information on content sharing candidate devices (S220). This is to request the user input by displaying information on other devices 400, 500, and 900 that have been registered in advance to, or have configured or established an interconnection with the first device 300 via the user input interface on the display 350. In this regard, the content sharing candidate devices to be provided may be selected based on the information included in the request for sharing content received in advance. For example, when the content type is a video type, the first device 300 may only provide information on devices capable of receiving a content of the video type by the content sharing.

The first device 300 detects a selection of one of the content sharing candidate devices (S230). The selection of the content sharing candidate device may be input by the user via the user input interface.

The first device 300 determines a sharing type based on the content type and/or the sharing type obtained in S210, or the device selected in S230 or information on the device selected in S230. Additionally, the first device 300 generates information for sharing content based on the determined sharing type (S240). The information for sharing content may include link information to access the shared content, a request for initiating mirroring, or the like. Additionally, the information for sharing content may include the information on content type or the sharing type.

In this regard, the link information may be divided into at least two types depending on the content type. When the content type is a first type or a second type, the link information may include link information generated to access the corresponding content. The first type may be a photo or an image, and the second type may be a video. The link information may be virtual URL information.

When the content type is a third type or a fourth type, the link information may be link information included in the request for sharing content in S210. The third type may be a URL for a specific app, such as an OTT (over-the-top) app, which is referred to as a deep link. This is a URL that the specific app may access, and the corresponding URL may be executed in the specific app of the sharing target device, that is, the second device 400.

The fourth type may be a URL that refers to a general web address. This may be executed in a web browser app of the second device 400.

When the shared content is not the content of the first to fourth types, the first device 300 generates the information for sharing content including the request for initiating mirroring (S240). The request for initiating mirroring includes communication port information to be used for the mirroring. The mirroring refers to a communication scheme of capturing audio and/or video of the shared content and transmitting the captured audio and/or video via a communication port formed between the first device 300 and the second device 400 on a local network. To this end, a separate app is needed on the second device 400.

Then, the first device 300 transmits the information for sharing content to the second device 400 (S250).

When receiving the information for sharing content, the second device 400 determines an app to be executed based on the information for sharing content (S260).

When the shared content is determined to be the content of the first or second type, the second device 400 determines an app that may output the photo, the image, or the video as the app to be executed. When the shared content is determined to be the content of the third or fourth type, the second device 400 determines the specific app or the web browser app as the app to be executed.

In one example, when the shared content is the content of the third type and the specific app is not installed on the second device 400, the second device 400 determines the web browser app as the app to be executed.

When the shared content is not within the content of the first to fourth types, the second device 400 determines an app for the mirroring as the app to be executed.

Thereafter, the second device 400 executes the app to be executed and outputs the shared content on the display.

In addition, after the first device 300 transmits the information for sharing content to the second device 400, the first device 300 may activate the control user interface (UI) for controlling the app to be executed of the second device 400 for the content. The control UI is output on the display 350 of the first device 300, and enables executed app of the second device 400 to be controlled in response to the user input (e.g., a touch input).

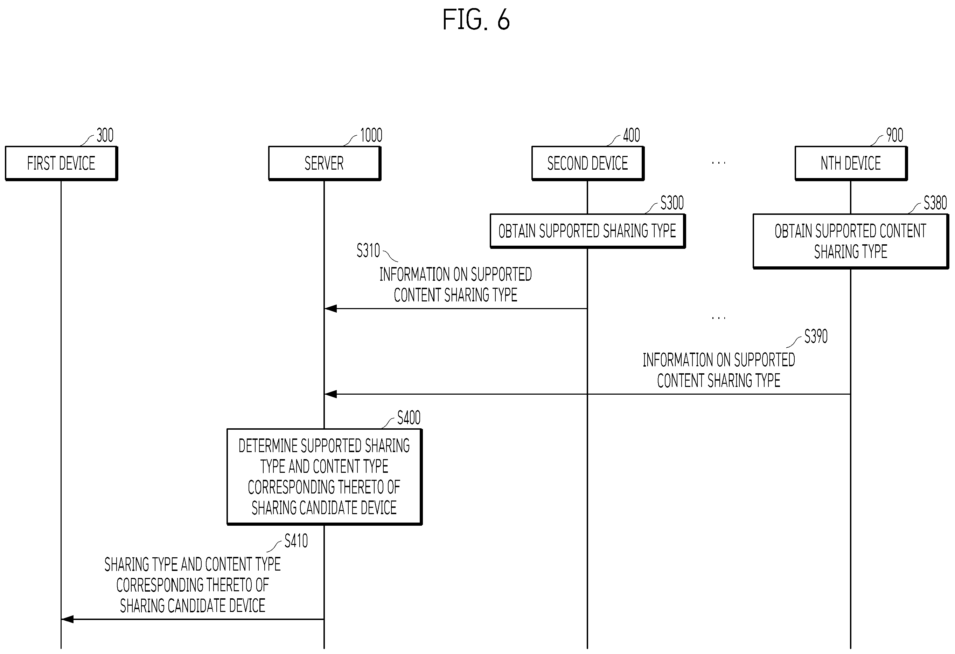

FIG. 6 shows a flowchart of procedures for sharing content between devices according to the present disclosure. While FIG. 5 relates to the content sharing between the devices within the local network (e.g., a Wi-Fi network), FIG. 6 relates to the content sharing between the devices belonging to different local networks. That is, FIG. 6 relates to the content sharing between remote networks.

FIG. 6 relates to procedures for collecting information on a sharing type (or scheme) and a content type supported by each device before sharing the content. In other words, for the content sharing between the devices, the device may register the sharing candidate devices in advance to itself or configure or establish the interconnection with the sharing candidate devices.

Each of devices 400, ..., and 900 may obtain the sharing type and the content type corresponding thereto, supported by itself (S300 and S380). Then, each of the devices 400, ..., and 900 may transmit the information on supported content sharing scheme and the content type corresponding thereto to the server 1000 (S310 and S390).

The server 1000 may determine the supported sharing type and the content type corresponding thereto received from each of the devices 400, ..., and 900 (S400).

Then, the server 1000 may transmit the sharing types of the sharing candidate devices and the content types respectively corresponding thereto to the first device 300 (S410).

When a request for sharing content is detected thereafter, the information on sharing types and the content types respectively corresponding thereto of the sharing candidate devices may be used in determining the sharing candidate devices based on a sharing type and a content type corresponding thereto related to the request for sharing content, and providing a list of the determined sharing candidate devices or a list of the determined sharing candidate devices including the sharing type and the content type.

In one example, the procedures S300, S310, S380, S390, S400, and S410 in FIG. 6 may be initiated when the request from the first device 300, the specific condition, or the like is satisfied.

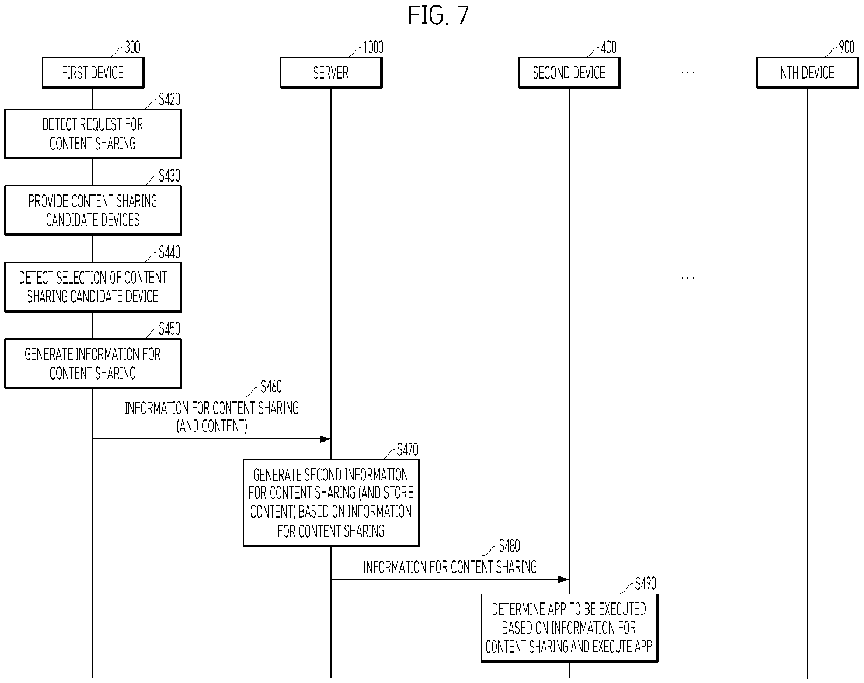

FIG. 7 shows a flowchart of procedures for sharing content between devices according to the present disclosure. FIG. 7 shows procedures when the second device 400 is selected among the one or more sharing candidate devices. FIG. 7 shows operations and communication of the first device 300 that requested the content sharing, the server 1000, and the second device 400, but the present disclosure may be extended even for the case in which other devices 500 and 900 are selected.

Because S420, S430, S440, and S450 shown in FIG. 7 are the same as S210, S220, S230, and S240 in FIG. 5, descriptions thereof will be omitted.

The first device 300 transmits the information for sharing content to the server 1000 to transmit the information for sharing content to the second device 400 (S460). The information for sharing content may include information on the device that is to receive the shared content (e.g., the second device 400).

In one example, when the shared content is the content of the first or second type, the first device 300 may also transmit the content itself to the server 1000 (S460).

The server 1000 may generate second information for sharing content based on the information for sharing content and store the corresponding content therein (S470). S470 is a procedure performed when the shared content is of the first type or the second type.

When the shared content is of the first type or the second type, because the first device 300 and the second device 400 belong to the different local networks, it is inefficient or impossible for the second device 400 to directly access the first device 300 or the local network to which the first device 300 belongs. Therefore, in this case, the first device 300 also transmits the content to the server 1000, so that the second device 400 may access the content via the server 1000. The server 1000 that stores the corresponding content locally generates the second information for sharing content, such as link information indicating the stored content.

When the shared content is content that is not within the third type to the fourth type, or the first type to the fourth type, the information for sharing content is transmitted in the same manner as described with reference to FIG. 5. That is, in this case, the server 1000 transmits the information for sharing content received from the first device 300 to the second device 400.

The server 1000 transmits the information for sharing content (or the second information for sharing content) to the second device 400 (S480).

When receiving the information for the, the second device 400 determines the app to be executed based on the information for sharing content (S490).

When the shared content is determined to be the content of the first or second type, the second device 400 determines the app that may output the photo, the image, or the video as the app to be executed. Additionally, the second device 400 may access the corresponding content using the second information for sharing content mentioned above.

When the shared content is determined to be the content of the third or fourth type, the second device 400 determines the specific app or the web browser app as the app to be executed.

In one example, when the shared content is the content of the third type and the specific app is not installed on the second device 400, the second device 400 determines the web browser app as the app to be executed.

When the shared content is not within the content of the first to fourth type, the second device 400 determines the app for the mirroring as the app to be executed.

Thereafter, the second device 400 executes the determined app and outputs the shared content on the display.

When the first device 300 and the second device 400 that receives the shared content belong to the different local networks as shown in FIGS. 6 and 7, a user using the first device 300 and a user using the second device 400 are highly likely to be different people, or the user of the first device 300 is not able to identify whether the second device 400 is being used, a use state of the second device 400, or the like.

Therefore, in the content sharing between the two remote devices as such, it is desirable to have the second device 400, which receives the shared content, go through a predetermined procedure before outputting the content on the display. Additionally, it is desirable to have the second device 400 go through a predetermined procedure depending on a state of thereof.

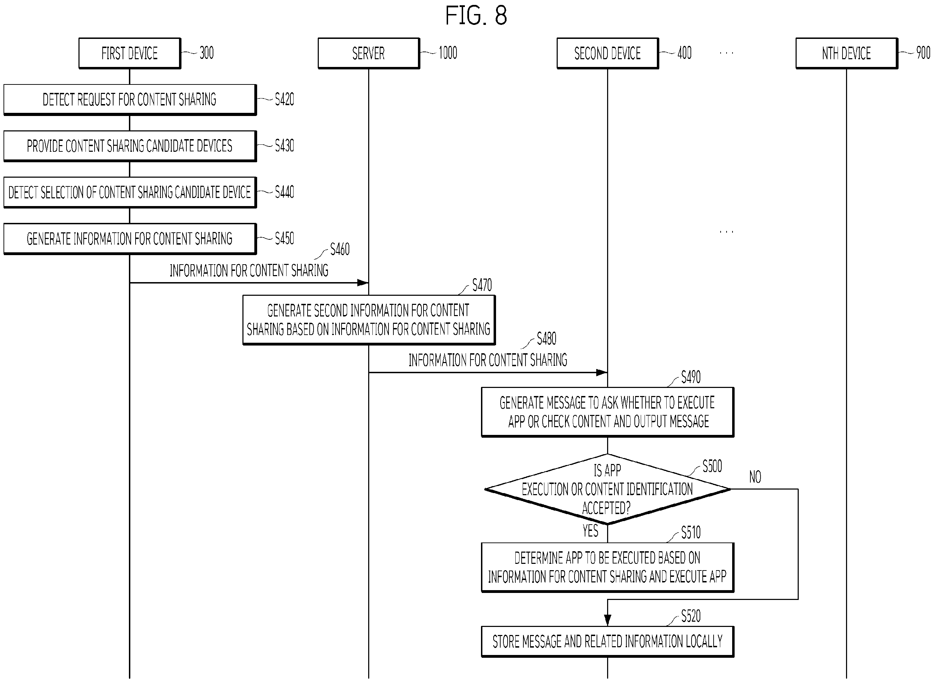

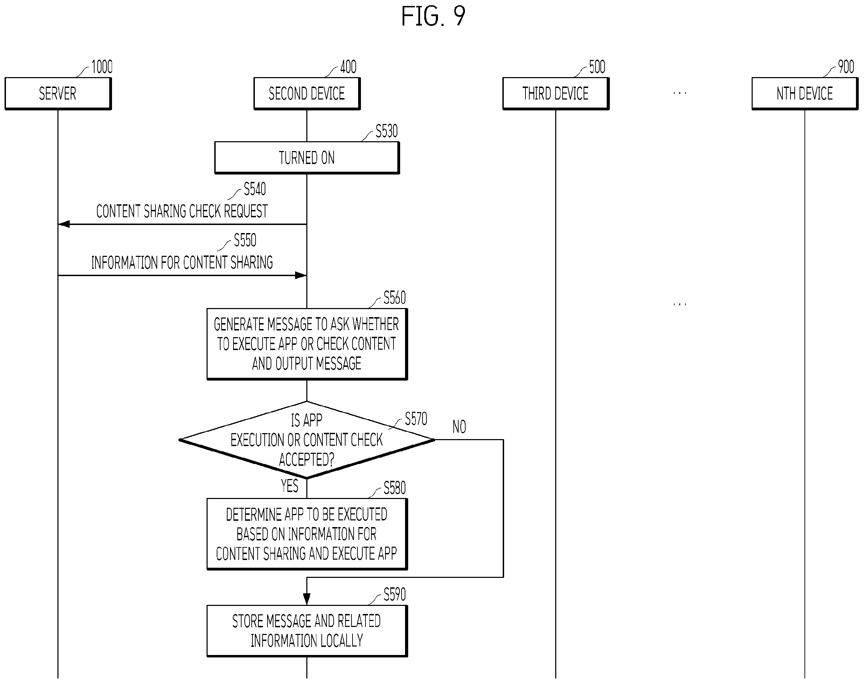

This is necessary to address security issues and not to harm a user experience of the user of the second device 400. Hereinafter, this will be described with reference to FIGS. 8 and 9.

FIG. 8 shows a flowchart of procedures for sharing content between devices according to the present disclosure. FIG. 8 relates to an embodiment in which a procedure of checking executed or shared content is added before executing the app on the second device 400 that has received the shared content.

Because S420 to S480 in FIG. 8 are the same as S420 to S480 in FIG. 7, descriptions thereof will be omitted.

The second device 400 generates a message to ask a user of the second device 400 whether to execute an app or check the content, and outputs a message on the display (S490). The message is displayed on the display via the user input interface to request the user input. The user of the second device 400 may input acceptance or rejection for the app execution or the content identification via the user input interface.

The second device 400 identifies whether the acceptance response for the app execution or the content identification is detected (S500).

When the acceptance response is detected, the second device 400 may determine the app to be executed based on the information for sharing content, execute the app, and output the content (S510). Because S5 10 is the same as S490 in FIG. 7, a detailed description thereof will be omitted.

When the acceptance response is not detected (i.e., when the rejection response for the app execution or the content identification is detected), the second device 400 stores the message and related information locally (S520). This allows the user of the second device 400 to check the stored message and related information later.

The flowchart in FIG. 8 and the description related thereto relate to a case in which the second device 400 is able to smoothly receive the information for sharing content from the server 1000. However, when the second device 400 is turned off, the transmission of the information for sharing content may be difficult. In this case, the server 1000 may store the information for sharing content from the first device 300 locally and wait until a request from the second device 400 is received. This will be described with reference to FIG. 9.

FIG. 9 shows a flowchart of procedures for sharing content between devices according to the present disclosure.

When the second device 400 is turned on (S530), the second device 400 transmits a request to the server 1000 to check whether there is information related to the content sharing for itself (S540).

In response to the check request from the second device 400, the server 1000 may check whether there has been the request for sharing content from another device (e.g., the first device 300). Accordingly, when there has been the request from the first device 300 to share the content with the second device 400, it is certain that the server 1000 stores information for sharing content corresponding to the request locally, as described above.

The server 1000 may transmit the information for sharing content to the second device 400 (S550).

After receiving the information for sharing content, the second device 400 may transmit a confirmation response therefor to the server 1000. Additionally, the server 1000 may transmit a message for delivering the information for sharing content to a mobile terminal or the like of a user (hereinafter, referred to as a "second user") registered as the user of the second device 400. Additionally, the server 1000 may allow the corresponding message or the information (e.g., the URL or the like) for sharing content to be stored in a library of an app for sharing content of the mobile terminal of the second user.

Because S560 to S590 in FIG. 9 are the same as S490 to S520 in FIG. 8, descriptions thereof will be omitted.

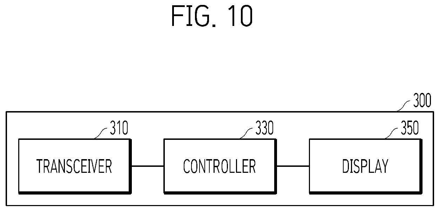

FIG. 10 shows a block diagram of the device 300 according to the present disclosure.

The device 300 includes a transceiver 310 for transmitting and receiving information for sharing content to/from a server or another device, a display 350 for outputting the content, and a controller 330 for controlling the transceiver and the display.

The controller 330 may provide information on sharing candidate devices in response to a request for sharing content, and the request for sharing content may include information on a content type of the content to be shared. The controller 330 may detect a selection for one of the sharing candidate devices. The controller 330 may determine a sharing type based on the content type or the selected device, and generate information for sharing content based on the determined sharing type.

Then, the controller 330 may transmit the information for sharing content to the selected device. When the selected device belongs to a different local network than a network to which the device 300 belongs, the controller 330 may transmit the information for sharing content to the server 1000. That is, the information for sharing content may be transmitted to the selected device via the server 1000.

The device 300 is capable of performing operations or functions beyond those described with reference to FIG. 10, and it can also perform operations or functions of the device 300 as described in FIGs. 3 through 9. To avoid redundancy, no further explanation will be provided with reference to FIG. 10.

In addition, as another aspect of the present disclosure, the operation of the proposal or the present disclosure described above may be provided as a code that may be implemented, carried out, or executed by a "computer" (a comprehensive concept including a system on chip (SoC) or a (micro)processor) or a computer-readable storage medium or a computer program product that stores or contains the code, and the scope of rights of the present disclosure is extensible to the code or the computer-readable storage medium or the computer program product that stores or contains the code.

## Claims

1. A method for a mobile multimedia device to share content between devices, the method comprising:
providing information on sharing candidate devices in response to a request for sharing content, wherein the request for sharing content includes information on a content type of the content to be shared;
detecting selection for one of the sharing candidate devices;
determining a sharing type based on the content type or the selected device and generating information for sharing content based on the determined sharing type; and
transmitting the information for sharing content to the selected device.

2. The method of claim 1, further comprising:
generating first link information for accessing the shared content and incorporating the generated first link information into the information for sharing the content in response to that the content type is a first type or a second type,
wherein the shared content is output via execution of a first app using the first link information on the selected device.

3. The method of claim 1, further comprising:
incorporating second link information included in the request for sharing the content into the information for sharing the content in response to that the content type is a third type or a fourth type,
wherein the shared content having the third type is output via execution of a second app using the second link information on the selected device, or output via a third app when the second app is not executable, and the shared content having the fourth type is output via execution of the third app using the second link information on the selected device.

4. The method of claim 1, wherein the information for sharing the content includes a request for initiating mirroring in response to that the content type is not within a first type, a second type, a third type, and a fourth type,
wherein the request for initiating mirroring includes communication port information to be used for the mirroring.

5. The method of claim 1, wherein the sharing candidate devices are selected based on the request for sharing the content.

6. The method of claim 1, further comprising:
activating a control user interface (UI) for controlling an app of the selected device for the content after transmitting the information for sharing the content to the selected device.

7. The method of claim 1, further comprising:
uploading the shared content to a server in response to that the selected device is a device in a remote network and the content type is a first type or a second type.

8. A multimedia device for sharing content, the multimedia device comprising:
a display configured to output content; and a controller configured to execute an app and control the content to be output on the display,
wherein the controller is configured to:
receive information for sharing content;
determine an app to be executed for the shared content based on the received information for sharing content; and
execute the determined app,
wherein the information for sharing content is generated depending on a content type of the shared content or a sharing type determined based on the multimedia device.

9. The multimedia device of claim 8, wherein the information for sharing content includes first link information for accessing the shared content,
wherein the controller is configured to execute the first app using the first link information.

10. The multimedia device of claim 8, wherein the information for sharing content includes second link information included in a request for sharing the content,
wherein the controller is configured to execute a second app using the second link information, or execute a third app when the second app is not executable, or
wherein the controller is configured to execute the third app using the second link information.

11. The multimedia device of claim 8, wherein the information for sharing content includes a request for initiating mirroring,
wherein the controller is configured to execute a fourth app for the mirroring in response to the request for initiating mirroring included in the information for sharing content,
wherein the request for initiating mirroring includes communication port information to be used for the mirroring.

12. The multimedia device of claim 8, wherein when the device is located out of a local network of a device that initiated the sharing, the controller is configured to receive the information for sharing content from a server.

13. The multimedia device of claim 12, wherein the information for sharing content includes third link information generated by the server in response to that the content type is a first type or a second type,
wherein the controller is configured to execute a first app using the third link information to access the shared content uploaded to the server.

14. The multimedia device of claim 12, wherein the controller is configured to output a message on the display for a selection input of a user on whether to output the app or the shared content on the display before executing the determined app.

15. A mobile multimedia device for sharing content, the mobile multimedia device comprising:
a transceiver configured to transmit information for sharing content; and a controller configured to generate the information for sharing content and control the transceiver,
wherein the controller is configured to:
provide information on sharing candidate devices in response to a request for sharing content, wherein the request for sharing content includes information on a content type of the content to be shared;
detect selection for one of the sharing candidate devices;
determine a sharing type based on the content type or the selected device and generate the information for sharing content based on the determined sharing type; and
transmit the information for sharing content to the selected device or via a server.

## Amended claims

### Amended claims in accordance with Rule 137(2) EPC.

1. A method for a mobile multimedia device to share content between devices, the method comprising:
obtaining at each of the devices (400, 500, 900) a content sharing type and a content type corresponding thereto, supported by itself and transmitting first information on the supported sharing type and the content type corresponding thereto to a first device (300),
storing the first information received from each of the devices (400,500, 900) at the first device (300),
providing to a user at a first device a list of determined content sharing candidate devices or a list of the determined content sharing candidate devices including the sharing type and the content type in response to a first request for sharing content, wherein the first request for sharing content includes second information on a content type of the content to be shared and
wherein the list of content sharing candidate devices are determined based on the first request;
detecting at the first device (300) a user selection for one of the content sharing candidate devices; determining at the first device (300) a sharing type based on the content type or a selected content
sharing candidate device (400) and generating third information for sharing content based on the determined sharing type; and
transmitting the third information from the first device to the selected content sharing candidate device (400).

2. The method of claim 1, further comprising:
generating first link information for accessing the shared content and incorporating the generated first link information into the third information in response to that the content type is a first type or a second type,
wherein the shared content is output via execution of a first app using the first link information on the selected content sharing candidate device (400).

3. The method of claim 1, further comprising:
incorporating second link information included in the first request into the third information in response to that the content type is a third type or a fourth type,
wherein the shared content having the third type is output via execution of a second app using the second link information on the selected content sharing candidate device, or output via a third app when the second app is not installed on the selected content sharing candidate device (400)and
wherein the shared content having the fourth type is output via execution of the third app using the second link information on the selected content sharing candidate device (400).

4. The method of claim 1, wherein the third information includes a second request for initiating mirroring in response to that the content type is not within a first type, a second type, a third type, and a fourth type,
wherein the second request includes communication port information to be used for the mirroring.

5. The method of claim 1, further comprising:
activating a control user interface (UI) for controlling an app of the selected content sharing candidate device (400)for the content after transmitting the third information to the selected content sharing candidate device (400).

6. The method of claim 1, further comprising:
uploading the shared content to a server (1000) in response to that the selected content sharing candidate device (400) is a device in a remote network and the content type is a first type or a second type.

7. A multimedia device (400) suitable for sharing content as a selected content sharing candidate device (400) in a method according to any one of claims 1 to 6, the multimedia device (400) comprising:
a display configured to output content; and a controller configured to execute an app and control the content to be output on the display,
wherein the controller is configured to:
receive the third information for sharing content;
determine an app to be executed for the shared content based on the received third information; and
execute the determined app,
wherein the third information is generated depending on the content type of the shared content or the sharing type determined based on the multimedia device (400).

8. The multimedia device (400) of claim 7, wherein the third information includes first link information for accessing the shared content,
wherein the controller is configured to execute a first app using the first link information.

9. The multimedia device (400) of claim 7, wherein the third information includes second link information included in the first request,
wherein the controller is configured to execute a second app using the second link information, or execute a third app when the second app is not is not installed on the multimedia device (400)e, or
wherein the controller is configured to execute the third app using the second link information.

10. The multimedia device (400) of claim 7, wherein the third information a second request for initiating mirroring,
wherein the controller is configured to execute a fourth app for the mirroring in response to the second request included in the third information,
wherein second request includes communication port information to be used for the mirroring.

11. The multimedia device (400) of claim 7, wherein when the multimedia device (400) is located out of a local network of the first device (300) that initiated the sharing, the controller is configured to receive the third information from a server (1000).

12. The multimedia device (400) of claim 11, wherein the third information includes third link information generated by the server (1000) in response to that the content type is a first type or a second type,
wherein the controller is configured to execute a first app using the third link information to access the shared content uploaded to the server (1000).

13. The multimedia device (400) of claim 11, wherein the controller is configured to output a message on the display for a selection input of a user on whether to output the app or the shared content on the display before executing the determined app.

14. A multimedia device (300) suitable for sharing content as a first device (300) in a method according to any one of claims 1 to 6, the multimedia device (300) comprising:
a transceiver configured to transmit the third information; and a controller configured to generate the third information and control the transceiver,
wherein the controller is configured to:
receive the first information from each of the devices (400, 500, 900),
store the first information received from each of the devices;
provide to a user a list of determined content sharing candidate devices or a list of the determined content sharing candidate devices including the sharing type and the content type in response to a first request for sharing content, wherein the first request for sharing content includes second information on a content type of the content to be shared;
wherein the content sharing candidate devices are determined based on the first request;
detect a user selection for one of the content sharing candidate devices ;
determine a sharing type based on the content type or the selected content sharing candidate device (400) and generate the third information based on the determined sharing type; and
transmit the third information to the selected content sharing candidate device (400) or via a server (1000).
